# EUROPÄISCHE PATENTSCHRIFT

(11) **EP 1 820 469 B1**
(45) Veröffentlichungstag und Bekanntmachung des Hinweises auf die Patenterteilung: **14.10.2009**
(21) Anmeldenummer: 07000466.8
(22) Anmeldetag: 10.01.2007
(51) Int. Cl.: A61C 9/00

(54) **Verfahren zum Abtasten von einem Zahnmodell**
Method for scanning a tooth model
Procédé destiné à palper un modèle de dent

(30) Priorität: 16.02.2006 EP 06003191
(43) Veröffentlichungstag der Anmeldung: 22.08.2007
(60) Teilanmeldung: 09009169.5
(73) Patentinhaber: Institut Straumann AG, 4002 Basel (CH)
(72) Erfinder: Holzner, Stefan, 80269 Hohenschäftlarn (DE); Weber, Gerhard, 86932 Pürgen (DE)
(74) Vertreter: Grünecker, Kinkeldey, Stockmair & Schwanhäusser Anwaltssozietät

(56) Entgegenhaltungen:
- EP-A- 0 913 130
- WO-A-02/39056
- US-A- 5 882 192
- US-A1- 2005 060 868

## Beschreibung

Die Erfindung betrifft ein Verfahren zum Abtasten von einem Zahnmodell.

Bekannt sind Vorrichtungen zum Abtasten von Zahnmodellen, um einen Datensatz zu erhalten, der digital das Zahnmodell wiedergibt. Derartige Datensätze können zum automatisierten Herstellen von Zahnersatzteilen eingesetzt werden (siehe z.B. EP-A2-0913130).

Falls verschiedene Datensätze jeweils nur einen Teil eines Modells wiedergeben, die beiden Datensätze jedoch einen Überlappungsbereich aufweisen, in dem sie denselben Teil des Modells darstellen, dann können die beiden Datensätze durch eine Matching-Verfahren zusammengefügt werden. Die Daten in dem Überlappungsbereich werden dazu verwendet die relative Anordnung der einzelnen Datensätze festzulegen bzw. zu ermitteln. Die Datensätze geben üblicherweise eine Oberflächenform in drei Dimensionen wieder. Das Matching wird daher als 3D-Matching bezeichnet. Mit dem Matching können auch eine größere Anzahl von Datensätzen wie etwa 5, 10, 15 oder 20 Datensätze zu einem einzelnen Datensatz zusammengesetzt werden.

Die Zahnmodelle können als sogenannte Sägezahnmodelle vorliegen. Diese Modelle verfügen über einen Modellteilhalter und herausnehmbare Modellteile. Die einzelnen Modellteile entsprechen einzelnen Abschnitten eines Gebissmodells, wie z.B. einem oder mehreren benachbarten Zähnen oder Zahnplätzen. Wenn die Modellteile von dem Modellteilhalter gehalten werden, geben sie ein Gebiss bzw. einen Teil davon wieder. Der Modellteilhalter definiert die relative Lage der einzelnen Modellteile zueinander.

Ein normales Gebiss eines Erwachsenen umfasst 32 Zahnplätze, 16 im Ober- und 16 im Unterkiefer. An jedem Zahnplatz ist normalerweise ein Zahn. An einem Zahnplatz kann jedoch auch ein Zahnersatzteil oder Teile davon oder Implantate oder Teile davon wie Implantatspfosten oder ein Restzahnbereich oder ein Zahnfleischareal vorliegen. Bei einer Zahnlücke ergibt sich in der Regel ein Zahnfleischareal an dem Zahnplatz. Ein Zahn kann auch Zahnersatzteile umfassen wie etwa Füllungen, Inlays, Overlays oder Ähnliches. Ein Restzahnbereich kann ein defekter Zahn oder ein vom Zahnarzt präparierter Zahn (beschliffen) sein. Mehrere Zahnplätze können auch von einem Zahnersatzteil, wie etwa einer Brücke besetzt sein.

Aufgabe der vorliegenden Erfindung ist es, bekannte Verfahren zum Abtasten von Zahnmodellen zu verbessern.

Diese Aufgabe wird gelöst mit einem Verfahren nach Anspruch 1.

Eine optische Abtasteinrichtung ist vorgesehen, mit der ein Modell in einem Abtastbereich abgetastet werden kann. Die Breite des Abtastbereichs kann zwischen 5 mm und 100 mm liegen. In diesem Intervall ergibt sich eine gute Auflösung der Daten zusammen mit einem genügend großen Abtastbereich des Modells. Die untere Grenze kann auch 10, 15, 20, 25, 30, 35, 40, 45, 50, 55, 60, 65, 70, 75 mm sein. Die obere Grenze kann auch 10, 15, 20, 25, 30, 35, 40, 45, 50, 55, 60, 65, 70, 75, 80, 85, 90, 95 mm sein.

Mit der Abtasteinrichtung kann ein Scan angefertigt werden, die sich über mehre Modellteile erstreckt. Damit kann die relative Lage der Modellteile gegeneinander bestimmt werden. Ein solcher Scan kann auch als Übersichtsscan bezeichnet werden. Die Modellteile sind dabei in den Modellteilhalter des Sägezahnmodells eingesteckt.

Weiterhin kann ein zweiter Scan (Einzelscan) oder mehrere davon angefertigt werden, der ein einzelnes Modellteil abtastet. Dieser Scan wird bevorzugterweise an einem Modellteil durchgeführt, das aus dem Modellteilhalter des Sägezahnmodells herausgenommen wurde. Das Modellteil wird dabei unabhängig von dem Modellteilhalter des Sägezahnmodells gehalten. Das Modellteil kann aber auch in dem Modellteilhalter eingesteckt sein. Die benachbarten Modellteile sollten dabei allerdings herausgenommen sein, um die optisch Zugänglichkeit zu dem Modellteil zu verbessern.

Die Daten des ersten Scans uns des zweiten Scans können unterschiedliche Auflösung aufweisen. Die Daten des Übersichtsscans können z. B. etwas gröber sein, als die des Einzelscans. Sie können jedoch auch die gleiche Auflösung oder eine höhere Auflösung aufweisen.

Die Daten des Einzelscans werden die Form eines Modellteils in der Regel vollständiger wiedergeben, als die des Übersichtsscans, da keine Abschattungen durch benachbarte Modellteile gegeben sind. Der Einzelscan ist in sofern vollständiger als Übersichtsscan.

Die ersten und zweiten Daten können gespeichert werden und von einer Einrichtung zum 3D-Matchen verarbeitet werden, um einen einzelnen Datensatz von dem Sägzahnmodell bzw. einem Abschnitt davon zu erhalten.

Die Vorrichtung weist eine Basisplatte auf. Die Basisplatte ist vorzugsweise auf der Oberseite im wesentlichen eben. Sie kann aber auch Vertiefungen wie Rillen, Nuten, Löcher oder Ähnliches und/oder Erhöhungen wie Stifte in der ebenen Oberseite umfassen. Damit können zum Beispiel andere Elemente wie ein Adapter und/oder ein Halter mit der Basisplatte gekoppelt werden.

Weiter umfasst die Vorrichtung eine Haltevorrichtung, mit der ein Sägezahnmodell ein Modellteil oder mehrere Modellteile oder Kombinationen davon gehalten werden können. Die Basisplatte zusammen mit der Haltevorrichtung erlaubt eine große Flexibilität bei der Anordnung der abzutastenden Objekte relativ zu dem Abtastbereich.

Die Basisplatte und die Haltevorrichtung sind vorzugsweise so ausgebildet, dass die Haltevorrichtung auf der Basisplatte an jeder beliebigen Position angeordnet werden kann. Die Basisplatte kann auch eine oder mehrere Rasteinrichtungen umfassen, in die ein Halter eingerastet werden kann. Die Basisplatte kann auch in einem Raster angeordnete Elemente aufweisen, die die Anordnung der Haltevorrichtung an verschiedenen definierten Rasterpositionen ermöglicht. Die Elemente (Löcher, Stifte, etc.) sind vorzugsweise periodisch angeordnet.

Die Basisplatte ist vorzugsweise relativ zu dem Abtastbereich drehbar. Damit können verschiedene Bereiche des Modells abgetastet bzw. der Abtastung zugänglich gemacht werden. Die Basisplatte kann die Form eines Drehtellers aufweisen. So ist sie gut in eine kreisrunde Öffnung einer Umgebungsplatte einpassbar.

Die Basisplatte ist vorzugsweise geradlinig verfahrbar. Damit können verschiedene Bereiche dem Abtasten zugänglich gemacht werden. Die geradlinige Verfahrbarkeit ist vorzugsweise in eine oder zwei Richtungen (bevorzugt senkrecht zueinander) gegeben.

Die Basisplatte ist vorzugsweise höhenverstellbar. Damit kann zum einen erreicht werden, dass sich das abzutastende Objekt in einem geeigneten Abstand zu der optischen Abtasteinrichtung befindet. Dies kann z. B. für die Fokussierung einer Beleuchtungsoptik oder einer Aufnahmeoptik relevant sein. Andererseits wird durch die Höhe der Basisplatte auch die Relation zwischen Drehpunkt der Basisplatte und dem Abtastbereich auf der Basisplatte verändert (s.u.).

Bevorzugt ist die Möglichkeit die Haltevorrichtung mittels Magnetkraft auf der Basisplatte zu halten. Die Kraft ist in der Regel ausreichend hoch, um ein unbeabsichtigtes Versetzten der Haltevorrichtung z. B. bei einem Scan zu verhindern. Eine solche Fixierung der Haltevorrichtung ist auch gut werkzeuglos lösbar. Weiter erlaubt sie eine Anordnung der Haltevorrichtung auf der Basisplatte an jeder beliebigen Stelle und Orientierung.

Die Haltevorrichtung kann das abzutastenden Objekt vorzugsweise in verschiedenen Höhen über der Basisplatte halten. Hierfür können verschiedene Haltevorrichtungen mit verschiedenen Höhen oder höhenverstellbare Haltevorrichtungen vorgesehen sein. Dadurch lässt sich der Abstand zwischen abzutastendem Objekt und Abtasteinrichtung ändern und auch die Relation zwischen Basisplatte und Abtastbereich (s.u.).

Aus der DE 103 04 111 A1 ist ein Phaseshift-Abtastverfahren bekannt, das hier eingesetzt werden kann. Auf dieses Dokument und das darin beschriebene Abtastverfahren sowie eine entsprechend ausgebildete Vorrichtung wird vollumfänglich Bezug genommen und dessen Offenbarung hier mit aufgenommen. Auch sind Laserlinien-Abtastvertahren bekannt, bei denen eine Laserlinie auf ein Objekt gerichtet wird und unter einen Triangluationswinkel das Objekt erfasst und aus dem Laserlinienabbild auf das Höhenprofil geschlossen werden kann.

Der Abtastbereich einer Phaseshift-Abtastung kann quadratisch oder rechteckig sein (gesehen von oben auf die Basisplatte). Die Kantenlänge des Quadrats oder die Kantenlänge jeder der Rechteckseiten kann 5, 10, 15, 20, 25, 30, 35, 40, 45, 50, 55, 60, 65, 70, 75, 80, 85, 90, 95, 100, 110, 120 oder 130 mm sein oder zwischen einem aus diesen Werten gebildeten Intervall liegen. Alle möglichen Intervallkombinationen aus den obigen Werten sind möglich.

Die Vorrichtung weist vorteilhafterweise eine Verlagereinrichtung auf, mit der eine Drehachse relativ zu dem Abtastbereich verlagert werden kann. Damit kann zum einen eine Drehachse außerhalb des Abtastbereichs als auch innerhalb des Abtastbereichs geschaffen werden. Ersteres ermöglicht es den Mittelpunkt eines Zahnbogens auf oder bei der Drehachse anzuordnen während sich der Zahnbogen selber in dem Abtastbereich befindet. Im zweiten Fall kann ein Modellteilmittelpunkt auf oder bei der Drehachse angeordnet werden, wobei sich dieser Modellteilmittelpunkt in Abtastbereich befindet.

Zum Verschieben der Achse kann ein oder mehre Linearverschiebetische oder auch ein Adapter vorgesehen sein. Die Drehachse kann auch zusätzlich oder alternativ gekippt werden, da dadurch andere Blickwinkel einer Abtasteinrichtung auf ein abzutastendes Zahnmodell ermöglicht werden. Der Adapter verfügt über ein Drehelement, das durch den Adapter mechanisch mit der Basisplatte gekoppelt wird, sodass bei einer Drehung der Basisplatte das Drehelement dreht. Das Drehelement kann dann eine im Vergleich zu der Drehachse der Basisplatte verlagerte Drehachse aufweisen.

Falls der Abtastbereich eine Ebene definiert, in der der Abtastbereich liegt, so ist insbesondere eine Verlagerung der Drehachse entlang oder parallel zu der Ebene vorteilhaft. Dies kann auch unabhängig von einer eventuellen Verlagerungskomponente in einer Richtung quer zu der Ebene erfolgen.

Vorteilhaft ist weiterhin eine Justagehilfe. Diese gibt in etwa vor, an welcher Stelle ein Sägezahnmodell oder ein Modellteil angeordnet werden soll. Dies betrifft sowohl die Höhe als auch die Position in der Oberflächenebene der Basisplatte relativ zu der Basisplatte. Für die Höhe und die Position können auch verschiedene Justagehilfen vorgesehen sein.

Die Justagehilfe für die Höhe kann z.B. auf die Basisplatte oder eine die Basisplatte umgebende Platte aufgestellt werden und mit einer Markierung die bevorzugte Höhe oder mit mehreren Markierungen einen möglichen Höhenbereich angeben. Bei dem Modell kann z. B. die Zahnfleischgrenze oder die Präparationsgrenze oder das obere Ende des Modells in Bezug auf die Höhenjustagehilfe angeordnet werden.

Die Justagehilfe für die Position kann eine durchsichtige Scheibe umfassen, auf der Markierungen wie etwa Linien oder Punkte angegeben sind, die bestimmte Referenzpunkte des Modells angeben. Die Scheibe kann oberhalb von der Basisplatte angeordnet werden und das Modell zum Einjustieren durch die Scheibe mit den Markierungen beobachtet werden.

Auch kann die Justagehilfe eine Kamera umfassen, die in definierter Lage zu dem Abtastbereich angeordnet ist und die auf die Basisplatte blickt. In einer Bilddarstellung des Kamerabildes können Informationen angezeigt werden, wie etwa Linien oder Pfeile mit denen notwendige Korrekturen der Positionierung des Modells auf der Basisplatte erkennbar gemacht werden. Z.B. kann eine Sollposition zusammen mit der Istposition dargestellt werden. Die Sollposition kann auch durch schematische Linien angedeutet werden.

Eine andere Vorrichtung zum Abtasten eines Zahnmodells verfügt über eine Haltevorrichtung, mit der ein Sägezahnmodell abgetastet werden kann.

Zum Herstellen von Zahnersatzteilen, wie etwa Brücken oder Ähnlichem, ist es üblicherweise nötig, sowohl die relative Anordnung von beispielsweise zwei benachbarten Elementen (etwa zwei Zähnen) zu erfassen, gleichzeitig jedoch auch die Form jedes einzelnen Zahns zu erfassen. Durch Abschattungseffekte ist es jedoch schwierig, die Form eines Zahns vollumfänglich gut zu erfassen, wenn beide Zähne nebeneinander angeordnet sind. Eine Erfassung mit den Zähnen nebeneinander ist jedoch nötig, um die relative Anordnung der beiden Zähne nebeneinander zu erfassen.

Von daher ist es vorteilhaft, wenn zum Einen ein Abtasten durchgeführt wird, wenn die verschiedenen Zähne in ihrer relativen Position zueinander definiert vorgegeben sind (Übersichtsscan) und anschließend ein Abtasten von jedem Einzelzahn, um dessen Form vollumfänglich gut zu erfassen (Einzelscan).

Bei der Vorrichtung ist lediglich eine Haltevorrichtung vorgesehen, mit der jedoch sowohl mehrere Zähne in ihrer relativen Position zueinander angeordnet gehalten werden können und gleichzeitig jedoch auch einzelne Zähne gehalten werden können, ohne dass hierfür zwei verschiedene Haltevorrichtungen notwendig sind.

Wenn in Vorangehendem oder im Folgenden von einem Zahn oder Zähnen gesprochen wurde, so gelten die Ausführungen selbstverständlich auch entsprechend für Zahnersatzteile, Restzahnbereiche, Zahnfleischareale oder Kombinationen davon, wie etwa einem Zahn und einem Zahnersatzteil, das benachbart dazu angeordnet ist. Zahnersatzteile können beispielsweise Implantate, Implantatspfosten, Brücken, Inlays, Overlays oder Ähnliches sein.

Die Haltevorrichtung umfasst vorteilhafterweise eine verformbare Masse zum Halten, wie etwa eine Knetmasse oder Wachs. In eine Knetmasse können Stifte von Zahnmodellen, wie sie in Sägezahnmodellen verwendet werden, gut eingedrückt werden, um so ein Zahnmodell zu erhalten. Weiterhin ist es auch möglich, auf eine Knetmasse ein größeres Modellstück aufzusetzen (auch ohne dass dieses über Stifte verfügt), wobei die verformbare Masse vorzugsweise eine genügende Klebewirkung aufweist, um dieses Modell zu halten. Die verformbare Masse ist vorteilhafterweise in einem Topf oder auf einer Platte angeordnet. Diese Platte oder dieser Topf können auf der Basisplatte 7 angeordnet werden oder die Basisplatte sein. Im ersten Fall kann ein Magnet zum Halten der Haltevorrichtung auf der Basisplatte vorgesehen sein.

Die vorab beschriebene Haltevorrichtung kann unabhängig von der Vorrichtung mit einer Basisplatte vorteilhaft sein. Sie kann jedoch auch in Kombination damit eingesetzt werden. Dabei ist dann beispielsweise die Haltevorrichtung mit der verformbaren Masse auf der Basisplatte anbringbar.

In einer anderen Ausführungsform einer Vorrichtung zum Abtasten von Zahnmodellen weist die Vorrichtung eine Beschickungsanlage auf. Mit der Beschickungsanlage können mehrere Zahnmodelle und/oder Einzelteile eines Zahnmodells nacheinander oder gleichzeitig einem Halter zugeführt werden. Dieser Halter kann beispielsweise ein wie oben beschriebener Halter aus einer verformbaren Masse sein.

Die Beschickungsanlage umfasst vorteilhafterweise eine oder mehrere Kameras, mit der die Position der Zahnmodelle und/oder der Teile eines Zahnmodells, wie etwa der Teil eines Sägezahnmodells, erfasst werden können. Aufgrund der von den Kameras aufgenommenen Bildern kann ermittelt werden, an welcher Stelle aufzunehmende Teile sind.

Für das Einsetzen von Zahnmodellen oder Teilen eines Zahlmodells in den Halter ist vorteilhafterweise ein Roboterarm vorgesehen. Mit den Kameras und dem Roboterarm kann eine vollautomatische Beschickung der Vorrichtung zum Abtasten von Zahnmodellen erfolgen. Auch andere Möglichkeiten zur Beschickung sind möglich. Beispielsweise können die Zahnmodelle auch mit einem Förderband in die Vorrichtung zum Abtasten überführt werden. Auch Schieber oder Ähnliches sind zum Bewegen der Zahnmodelle möglich.

Bei einem Verfahren zum Abtasten eines Sägezahnmodells sind folgende Schritte vorgesehen. Die verschiedenen Modellteile eines Sägezahnmodells werden von einem Modellteilhalter gehalten und in dieser Konfiguration abgetastet. In einem weiteren Schritt werden eine oder mehrere der Modellteile abgetastet, wobei hierbei jedes Modellteil unabhängig von den anderen Modellteilen erfasst werden kann. Die beiden Schritte können in beliebiger Reihenfolge durchgeführt werden.

Die Verwendung eines Sägezahnmodells mit einzelnen Modellteilen und einem Modellhalter hat den Vorteil, dass unmittelbar nacheinander die Modellteile, die von dem Modellhalter gehalten werden, abgetastet werden können und direkt danach die einzelnen Modellteile abgetastet werden können. Ein Zersägen eines einteiligen Zahnmodells zwischen zwei Abtastvorgängen ist somit nicht nötig, so dass das Abtasten einfach und schnell durchgeführt werden kann.

In einer vorteilhaften Ausführungsform des Verfahrens werden sowohl Innenseite als auch Außenseite des Sägezahnmodells abgetastet. Dadurch ergibt sich ein guter Gesamtüberblick über das Zahnmodell. Die von den einzelnen Modellteilen gewonnenen Daten können mit den Daten, die von den in den Modellteilhalter eingesteckten Modellteilen gewonnenen wurden mittels Datenverarbeitung zusammengebracht (Matching) werden. Hierfür ist an sich das Abtasten der Außenseite oder der Innenseite eines Sägezahnmodells ausreichend. Jedoch ergibt sich durch die Verwendung von Daten, die sowohl die Außenseite als auch die Innenseite des Sägezahnmodells betreffen, eine verbesserte Gesamtdarstellung des Zahnmodells und auch ein verbessertes Matching-Ergebnis.

Das Abtasten des Sägezahnmodells im ersten erwähnten Schritt kann durch das Abtasten von mehreren Einzelbereichen erfolgen, die sich jeweils über mehrere Zahnplätze erstrecken. So ist es beispielsweise möglich, ein Modell, das einen gesamten Ober- oder Unterkiefer repräsentiert, mit 3, 4, 5 oder 6 Einzelbereichen auf der Außenseite und einer entsprechenden oder anderen Anzahl auf der Innenseite abzutasten.

Zwischen dem Abtasten der verschiedenen Einzelbereiche kann das Modell verschoben und/oder gedreht werden, um einen guten Zugang zu den jeweils abzutastenden Bereichen zu erhalten.

Jede der beschriebenen Vorrichtungen kann eine Verdunklungseinrichtung umfassen, die die abzutastenden Objekte abschattet und vor Umgebungslicht schützt. Dies verbessert die optische Abtastung.

Jede der Vorrichtungen kann über einen Internetanschluss verfügen. Damit sind Internet-Updates möglich. Auch wird dadurch die Fernwartung der Vorrichtung erleichtert, bzw. ermöglicht.

Weiter kann jede der Vorrichtungen eine zusätzliche Kamera umfassen, die verschiedene Teile der Vorrichtung und/oder Modelle abbilden kann. Die Kamera kann zur Fernwartung eingesetzt werden. Auch eine bereits vorhandene Kamera (z.B. aus der Justage oder Bildgewinnung in der Beschickungsanlage) kann hierfür eingesetzt werden. Die Kamera nimmt bevorzugt 2D-Bilder auf.

Das deutsche Patent DE10 2005 016 233 vom 19-10-2006 vom selben Anmelder offenbart ein Verfahren und eine Vorrichtung zur Datenübermittlung bei der Herstellung von Zahnersatzteilen" . Die dort aufgeführten Merkmale einer Abtastvorrichtung zum Gewinnen von Datensätzen können jedes für sich oder in beliebiger Kombination bei der Vorrichtung dieser Anmeldung vorgesehen sein. Insbesondere die Datenfemübertragungsmittel mit der Kamera zum Übertragen von digitalen Bilddaten und vorteilhafte Ausführungsformen davon aus der deutschen Anmeldung können bei der Vorrichtung dieser Anmeldung vorgesehen sein. Auch die in der deutschen Anmeldung beschriebenen Verfahren können mit der Vorrichtung dieser Anmeldung durchgeführt werden bzw. entsprechende Mittel dazu vorgesehen sein.

Vorteilhafte Ausführungsformen der Vorrichtung des Verfahrens werden anhand der Figuren erläutert werden. Dabei zeigt:
- Fig. 1: schematische Darstellungen einer Vorrichtung zum Abtasten von Zahnmodellen,
- Fig. 2: schematische Darstellungen der Draufsicht auf eine Basisplatte und Seitenansichten mit einem Sägezahnmodell und einem Modellteil,
- Fig. 3: verschiedene schematische Schnittzeichnungen von Adaptern,
- Fig. 4: verschiedene schematische Darstellungen eines Halters,
- Fig. 5: verschiedene Verfahrenszustände bei Durchführung des Verfahrens,
- Fig. 6: eine schematische Darstellung einer Beschickungseinrichtung.

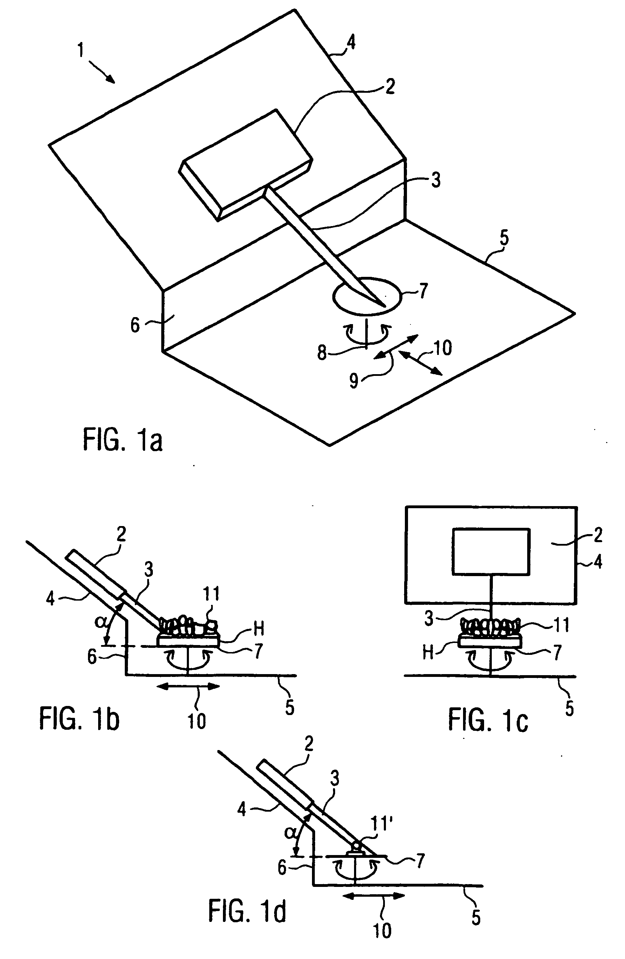

In Fig. 1a ist eine Vorrichtung 1 zum Abtasten von Zahnmodellen in einer dreidimensionalen schematischen Darstellung gezeigt. Das Gerät verfügt über eine Grundplatte 5, an der über einen Träger 6 eine schräg angestellte zweite Grundplatte 4 angeordnet ist. Die Grundplatte 4 ist in einem Winkel von 20° bis 80°, oder 35° bis 60°, bevorzugter Weise ca. 45° zu der Grundplatte 5 angeordnet. Die Grundplatte 4 trägt ein optisches Abtastsystem 2, das mit einem streifenförmigen Abtastbereich 3 Modelle abtasten kann. Der streifenförmige Abtastbereich 3 steht ebenfalls in einem Winkel von 20° bis 80°, bevorzugt 35° bis 60°, noch bevorzugter ca. 45° oder mehr oder weniger als 45° zu der Grundplatte 5 bzw. Basisplatte 7.

Der Weg des Laserlichts zum Beleuchten des Modells mit der Laserlinie definiert bei der Laserlinienabtastung den Abtastbereich 3.

Bei einer Laserlinienabtastung wird eine Ebene durch das Licht der Laserlinie definiert. Bei einer Phaseshift-Abtastung wird eine Ebene durch die Mitte des Beleuchtungslichts definiert. In der Regel liegt in dieser Ebene auch die Blickrichtung der Beobachtungskamera des Phaseshift-Verfahrens. Die Blickrichtung schließt mit der Oberfläche der Basisplatte bevorzugt einen Winkel von 20° bis 80° ein. In diesem Fall definiert die Blickrichtung den Abtastbereich. Beleuchtung und Kamera können auch ausgetauscht werden. In diesem Fall wird der Abtastbereich durch die Beleuchtung definiert. Die zentrale (optische) Achse der Beleuchtung hat dann einen Winkel von 20° bis 80° mit der Oberfläche der Basisplatte. Die Winkel können auch zwischen 35° und 60° oder bei ca. 45° oder über oder unter 45° liegen.

Das Modell kann auf einer Basisplatte 7 angeordnet werden. Die Basisplatte 7 ist als Drehteller ausgeführt und weist eine Drehachse 8 auf, wobei der Drehteller 7 in beide Richtungen oder auch nur in einer Richtung um die Achse 8 gedreht werden kann.

Die Achse 8 kann in Richtungen 9 und 10 verschoben werden. Die Grundplatte 5 kann dazu entsprechende Aussparungen aufweisen, so dass es sich vielmehr um einen Rahmen handelt. Richtung 9 liegt in einer Richtung quer zu der Ebene, die durch den Abtaststreifen 3 definiert wird. Die Richtung 10 liegt in dieser Ebene und senkrecht zu der Richtung 9. Durch Bewegen der Achse 8 in Richtung 9 kann ein Modell auf den Drehteller 7 in Richtung quer zu dem Streifen 3 verschoben werden. Dadurch kann ein Bereich des Modells abgetastet werden. Durch ein Verschieben der Achse 8 in Richtung 10 kann derjenige Bereich, der beim Verschieben in Richtung 9 abgetastet wird, verändert werden.

Fig. 1b zeigt einen Blick auf die Vorrichtung aus Fig. 1a, parallel zu den Grundplatten 4 und 5. Fig. 1c zeigt einen Blick auf die Vorrichtung aus Fig. 1a entlang Richtung 10.

Zwischen der Oberfläche der Basisplatte 7 und dem Abtastbereich 3 ist ein Winkel alpha eingeschlossen (Fig. 1b und 1d) . Dieser beträgt z.B. zwischen 20° und 80°, 35° bis 60° oder bevorzugt ca. 45°. Dieser Winkel erlaubt eine besonders gute Darstellung und Abtastung der Präparationsgrenze. Dort ist eine besonders genaue Abtastung des Modells für gut abschließende Zahneratzteile wünschenswert.

Wie in Figur 1b zu erkennen kann durch eine Veränderung der Höhe der Basisplatte 7 oder des Modells 11 über der Basisplatte 7 die Relation zwischen Drehpunkt des Modells und des Abtastbereichs 3 verändert werden. Bei dem in Fig. 1b dargestellten Fall wird ein Bereich des Modells außerhalb von dem Drehpunkt des Modells abgetastet. Würde das Modell weiter unten angeordnet, würde der Abtastbereich 3 einen auf der Basisplatte 7 weiter innen liegenden Bereich abtasten, der näher oder bei der Drehachse 8 liegt.

Auf der Basisplatte 7 ist ein Halter H angeordnet, der ein Sägezahnmodell 11 hält. Der Halter H kann beispielsweise Knetmasse sein.

Während in Fig. 1 eine Ausführungsform gezeigt ist, bei der der Drehteller 7 fest mit der Drehachse 8 verbunden ist, und die Drehachse durch Verschieben in Richtung 9 und 10 mit beispielsweise X-, Y-Tischen verlagert wird, sind auch andere Konfigurationen denkbar. Beispielsweise kann eine Drehvorrichtung lösbar mit dem Drehteller 7 verbunden werden. Hierzu kann beispielsweise ein Elektromagnet unterhalb von dem Drehteller 7 an der Achse 8 ein- oder ausgeschaltet werden bzw. von dem Drehteller weg oder auf diesen zu bewegt werden, um die magnetische Kopplung zu erhöhen. Dafür kann auch ein Permanentmagnet vorgesehen werden. Auch eine Saugvorrichtung, die den Drehteller mit Unterdruck an verschiedenen Positionen für die Drehung fixiert, kann vorgesehen sein.

Zur Verlagerung der Drehachse wird die Verbindung zwischen Drehachse und Drehteller gelöst, die Drehachse verschoben (in Richtung 9 oder 10) und die Verbindung zwischen Drehachse und Drehteller dann an einem anderen Ort wiederhergestellt. Die Verbindung kann mit dem Elektromagneten, einem Permanentmagneten oder einer Saugvorrichtung oder ähnlichem hergestellt werden. Der Drehteller 7 kann, während er nicht durch die Drehachse 8 gehalten wird, auf einer Auflage aufliegen, die eine Öffnung hat, durch die die Drehachse 8 hindurchgeführt werden kann, die jedoch den äußeren Umfang des Drehtellers 7 stützt. Mit dieser Konfiguration sind Rotationen des Drehtellers 7 um andere Achsen als den Mittelpunkt des Drehtellers 7 möglich.

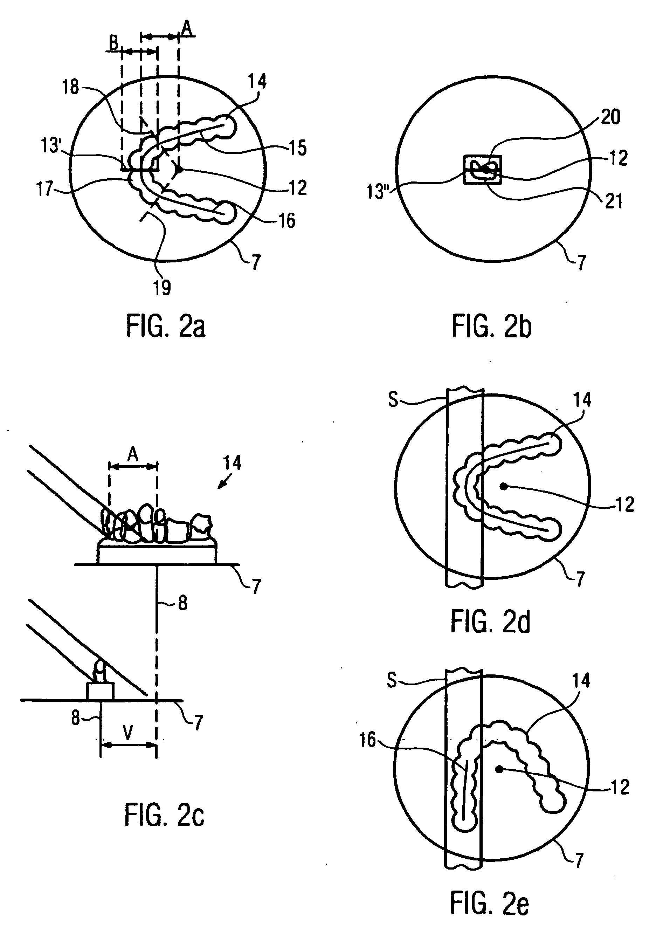

In Fig. 2a ist ein Zahnmodell 14 auf einem Drehteller 7 gezeigt. Das Zahnmodell 14 weist zwei im Wesentlichen lineare Stücke 15, 16 auf, die mit einem kreislinienförmigen Stück 17 (Zahnbogen) verbunden sind. Der Mittelpunkt des kreislinienförmigen Stücks 17 trägt die Bezugsziffer 12. Praktisch sämtliche Gebisse von Menschen weisen eine solche Konfiguration auf. Der Übergang zwischen den linearen Stücken 15, 16 und dem kreisbogenförmigen Stück 17 ist durch die gestrichelten Linien 18 und 19 gekennzeichnet.

Um das kreisbogenförmige Stück 17 abzutasten, ist es vorteilhaft, den Drehteller 7 um den Mittelpunkt 12 zu drehen. Der von dem streifenförmigen Scanbereich 3 erfassbare Bereich ist mit dem Strich mit der Bezugsziffer 13' bezeichnet. Er hat eine Breite B, die in der Ebene der Basisplatte 7 gemessen wird und zwischen 5 mm und 80 mm beträgt. Durch Rotation des Drehtellers 7 kann der zwischen den gestrichelten Geraden 18, 19 liegende Bereich des Zahnmodells 14 eingescannt werden. Hierbei ist zu beachten, dass der Mittelpunkt 12 außerhalb von dem durch den Abtastbereich erfassbaren Bereich 13' liegt. Die Drehachse des Drehtellers 7 liegt hier möglichst nahe oder auf dem Mittelpunkt 12 des kreislinienförmigen Stückes 17. Der Abstand zwischen 12 und der Mitte des Scanbereichs B ist mit A bezeichnet.

Das Abtasten kann sowohl während der Drehung des Drehtellers 7 vorgenommen werden oder auch durch ein (vorzugsweise lineares) Verschieben in Richtung quer zum Abtastbereich (In Fig. 2a nach oben bzw. nach unten). Im letzten Fall kann das Stück 17 durch Abtasten von Einzelbereichen abgetastet werden, wobei die Daten der Einzelbereiche durch eine jeweilige Überlappung von benachbarten Bereichen miteinander mit einem Matching-verfahren verbunden werden können. Zwischen dem Abtasten dieser Einzelbereiche wird der Drehteller um seine Drehachse ein Stück weiter gedreht, um den nächsten Einzelbereich abzutasten und dadurch nach und nach das Stück 17 insgesamt abgetastet zu haben. Diese zusammengesetzten Daten bilden die Daten des Übersichtsscans.

Bei dem in Fig. 2b dargestellten Fall ist auf dem Drehteller 7 ein Modell 20 eines Einzelzahns 21 angeordnet. Die Spitze des Zahn trägt die Bezugsziffer 12. Um das Modell des Zahns 21 gut und von allen Seiten abzutasten, sollte der Zahn im Vergleich zum Abtastbereich gedreht werden können. Dazu ist eine Drehung um den Punkt 12 vorteilhaft. Hierbei ist es jedoch sinnvoll, dass der Scanbereich 13" bei der gewünschten Drehachse 12 liegt.

Durch eine Verlagerung der Drehachse des Drehtellers relativ zu dem Abtastbereich ist es möglich, sowohl eine Konfiguration (zwischen Drehachse und Abtastbereich) wie sie in Fig. 2a dargestellt ist, als auch eine Konfiguration, wie sie in Fig. 2b dargestellt ist, zu erreichen. Entsprechendes ist auch mit einer Höhenverstellung der Basisplatte und/oder einer Haltevorrichtung möglich.

In Fig. 2c ist oben der Fall dargestellt, bei dem ein Übersichtsscan des Sägezahnmodells erstellt werden soll. Die Drehachse 8 ist in etwa bei dem Mittelpunkt 12 des Zahnbogens 17. Der Abtastbereich liegt bei dem Zahnbogen. In Fig. 2c unten ist ein Modellteil eines einzelnen Zahns bei der Drehachse 8 angeordnet. Er kann somit gedreht werden, ohne den Abtastbereich zu verlassen. Die Drehachse 8 muss hierzu im Vergleich zu Fig. 2c oben um den Betrag V verlagert werden. V beträgt z.B. 22,5 mm.

Durch Verschieben der Basisplatte 7 unter dem Scanbereich 13 hindurch in einer Richtung quer zu dem Scanbereich 13 kann ein streifenförmiger Bereich auf der Basisplatte abgetastet werden. Dieser ist in Fig. 2d mit Bezugszeichen S versehen. Wie zu erkennen, kann der Zahnbogen recht gut abgetastet werden. Durch Drehung um dem Zahnbogenmittelpunkt 12 kann der geradlinige Teil 16 (bzw. zumindest seine Außenseite) vollständig in den Streifen S gebracht werden und in bevorzugterweise in einem Zug abgetastet werden.

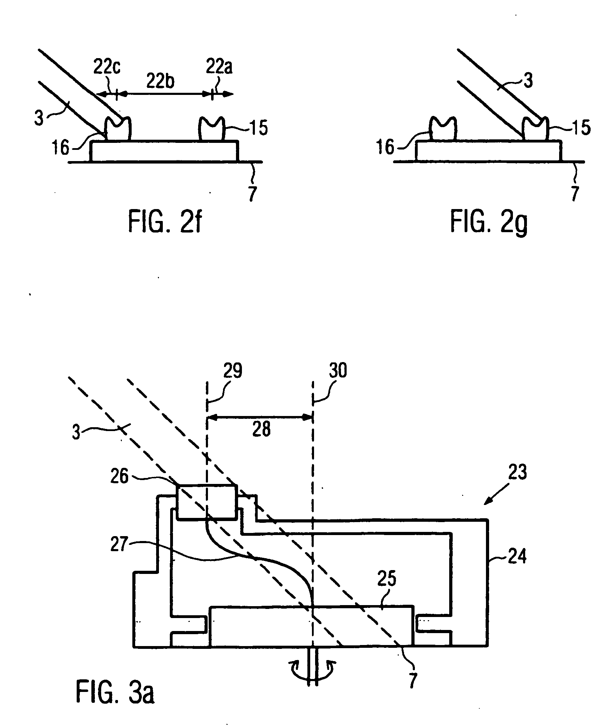

Falls es gewünscht ist sowohl den Außenbereich des Modells 14 als auch den Innenbereich abzutasten so ist ebenfalls eine Verlagerung des Drehtellers vorteilhaft. In Fig. 2f und Fig. 2g ist der Drehteller 7 in Schnittansicht gezeigt. Das Modell 14 ist im Vergleich zu Figur 2a um ca. 90° im Uhrzeigersinn gedreht worden. Der Außenbereich des Zahnmodells ist mit Bezugsziffer 22a bezeichnet und der Innenbereich mit Bezugsziffer 22b. Der Außenbereich 22a wird vorteilhafterweise von Außen und der Innenbereich von Innen abgetastet, um Abschattungen zu vermeiden. Um dies zu Erreichen ist der Drehtisch 7 bzw. dessen Drehachse vorzugsweise verlagerbar. So kann, wie in Fig. 2f dargestellt, der Außenbereich 22a des Teils 16 von Außen abgetastet werden und der Innenbereich 22b des Teils 15 von Innen (s. Fig. 2g). In Fig. 2g ist im Vergleich zu Fig. 2f der Drehtisch 7 mit dem Modell verschoben worden. Die Verschiebung ist hierbei größer als in Fig. 2c. Die benötigte Verschiebung kann bis zum 100mm betragen.

Die Verlagerung kann auch soweit erfolgen, dass die Basisplatte bis zu einer Beschickungsposition erfolgt, an der das Einsetzten und Herausnehmen eines Modells leicht möglich ist.

Die verschiedenen Verlagereinrichtungen können jeweils zu zweit oder alle drei zusammen durch ein und dieselbe Verlagerungseinrichtung gegeben sein. Jede der Verlagerungseinrichtungen kann aber auch unabhängig von den andern sein. Sie können sich auch jeweils überlagern (Beispiel: Zwei Lineartische so montiert, dass einer den anderen bewegen kann und die jeweilige Bewegungsrichtung jeweils gleich (oder auch verschieden) ist).

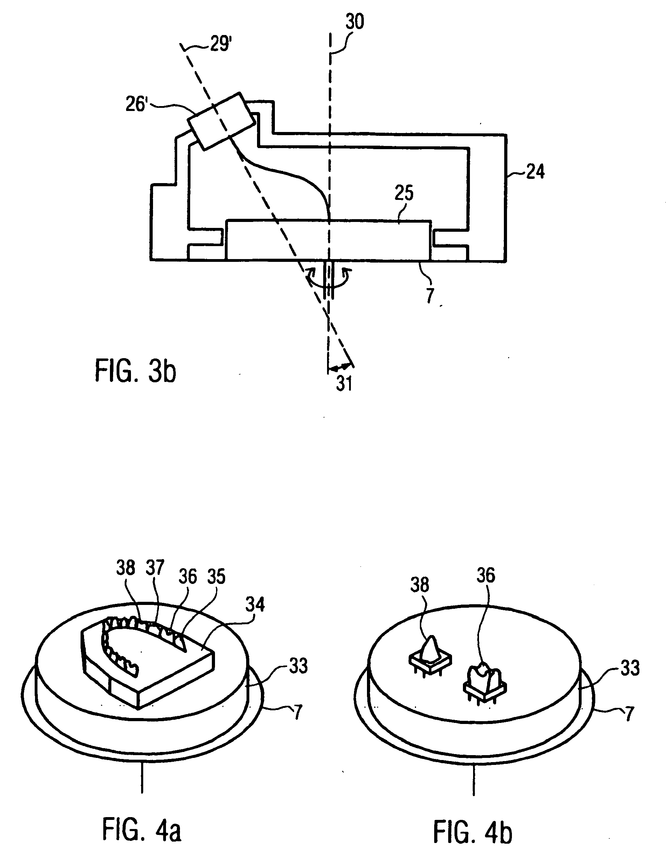

In den Fig. 3a und 3b sind Adapter 23 gezeigt, mit denen die Drehachse relativ zum Abtastbereich verlagert werden kann. In Fig. 3a ist der Drehteller 7 mit der Drehachse 30 dargestellt. Zum Abtasten eines kleinen Modellstücks, wie etwa das eines Einzelzahns, ist ein Drehelement 26 vorgesehen. Dieses kann entsprechend drehbar in einem Gehäuse 24 gelagert sein. Weiterhin weist der Adapter ein Element 25 auf, das mit dem Drehteller kraftschlüssig verbunden werden kann. Dies kann durch entsprechende Formgebung des Drehtellers und des Elements 25 beispielsweise durch Stifte und Löcher oder Nuten und Vorsprünge oder Ähnliches gegeben sein, als auch beispielsweise durch Magnetkraft zwischen dem Element 25 und dem Drehteller 7.

Das Drehelement 26 und das Element 25 sind mit einer (flexiblen) Welle 27 miteinander verbunden, die die Drehbewegung des Elements 25 auf das Drehelement 26 überträgt. Statt einer Welle 27 sind auch Zahnräder in einer entsprechenden Getriebeanordnung, Zahnriemen oder Ähnliches zur Übertragung der Drehbewegung möglich. Das Element 25 wird durch die Drehung des Drehtellers 7 selber gedreht. Auf dem Drehelement kann ein Zahnmodell angeordnet werden. Hierzu kann auf oder in dem Drehelement oder einem darauf befestigten Topf eine verformbare Masse (z. B. Knetmasse) vorgesehen sein.

Das Gehäuse 24 des Adapters 23 wird außerhalb des Drehtellers 7 ortsfest gehalten.

Wie in Fig. 3a zu erkennen, wird die Achse der relevanten Drehbewegung von der Drehachse 30 des Drehtellers 7 um den Abstand 28 zu der Drehachse 29 des Drehelements 26 hin verlagert. Die Verlagerung erfolgt in der Ebene, die durch den Abtastbereich 3 definiert wird.

Im Vergleich zu Fig. 3a ist in Fig. 3b das Drehelement 26' verkippt. Die Drehachse 29' des Drehelements 26' weist somit einen Winkel 31 gegenüber der Drehachse 30 auf. Dieser Winkel beträgt vorzugsweise zwischen 5° und 40°, beispielsweise 15° bis 25°, vorzugsweise ca. 20°. Der Winkel 31 sollte vorzugsweise zwischen dem Winkel liegen, den der Abtastbereichbereich 3 mit einer Senkrechten der Grundplatte 5 bzw. einer Senkrechten des Drehtellers 7 einnimmt.

In Fig. 4a ist ein Drehteller 7 mit einer darauf angeordneten Haltevorrichtung 33 gezeigt. Die Haltevorrichtung 33 umfasst eine verformbare Masse, wie etwa Knetmasse. Auf dieser Knetmasse kann durch Auflegen ein Zahnmodell angeordnet und durch die Knetmasse gehalten werden. Durch die Haftreibung zwischen dem Zahnmodell und der verformbaren Masse 33 ergibt sich eine genügende Halterung des Modells.

Die verformbare Masse ist in einer zylindrischen Form auf dem Drehteller aufgestellt. Der Drehteller kann aber auch einen Topf umfassen, in dem die verformbare Massen angeordnet ist.

Das Modell ist hier in einer beispielhaften Ausführungsform ein Sägezahnmodell. Bei diesem ist ein Modellteilhalter 34 vorgesehen, in den einzelne Modellteile, die einem oder mehreren Zahnplätzen entsprechen, mit Stiften oder sonstigen Mitteln eingesteckt sind. Die verschiedenen Modellteile tragen hier beispielhaft die Bezugsziffern 35 bis 38. Diese Modellteile 35 bis 38 können einzeln aus dem Modellteilhalter 34 herausgenommen werden. Sie können mit den Stiften in die verformbare Masse 33 eingedrückt werden. Sie werden dadurch, wenn auch lose, jedoch ausreichend gehalten, um dem Abtastvorgang zugefügt zu werden. Bevorzugt ist hierbei ein optisches Abtasten, da hierbei keine Kräfte auf die Modellteile ausgeübt werden.

Mit der verformbaren Masse 33 ist es somit möglich, sowohl ein gesamtes Sägezahnmodell als auch einzelne Modellteile davon zu halten, so dass nur ein einzelner Halter benötigt wird, ohne dass zwei jeweils verschiedene Halter benötigt werden.

Auf der verformbaren Massen kann eine Maske beispielsweise aus Papier oder Metall dauerhaft oder vorübergehend angeordnet werden, mit denen die ungefähren Positionen der einzelnen Teile vorgegeben werden.

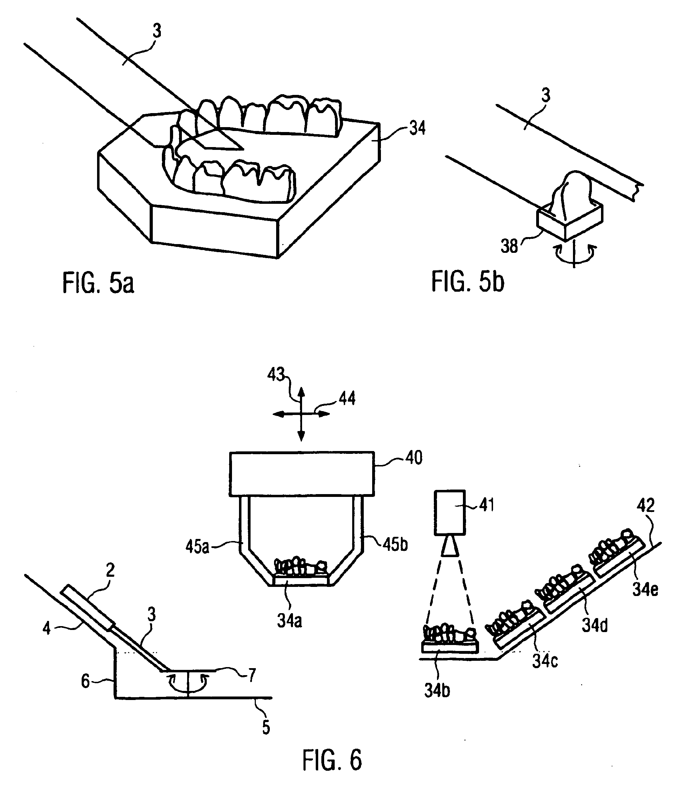

In Fig. 5a ist ein Sägezahnmodell gezeigt, das sich in dem Abtastbereich 3 befindet. Durch VerdrehungNerschiebung des Sägezahnmodells kann die Relativposition der verschiedenen Modellteile gegeneinander in dem Modell erfasst werden. Das dargestellte Modell ist ein Sägezahnmodell mit einem Modellteilhalter 34.

Mit der in Fig. 5a dargestellten Konfiguration kann nur die Außenseite der Zähne abgetastet werden. Um auch die Innenseite abzutasten, muss das Sägezahnmodell entsprechend verschoben werden.

Vorteilhaft ist insbesondere ein Abtasten sowohl der Außenseiten der Zahnmodelle als auch der Innenseiten.

Nachdem das gesamte Zahnmodell optisch abgetastet wurde, werden die Modellteile des Sägezahnmodells aus dem Modellteilhalter 34 herausgenommen. Sie werden dann, wie in Fig. 5b dargestellt, einzeln abgetastet. Das Zahnmodell 38 kann hierbei entweder während der Drehung desselben abgetastet werden, um so alle Seiten des Zahnmodells abzutasten, oder das Zahnmodell kann durch den streifenförmigen Abtastbereich 3 linear durchverschoben werden und zwischen den einzelnen Durchschiebvorgängen gedreht werden. Auch dadurch ist es dann durch ein digitales Matchen der gewonnenen Daten möglich, ein vollumfängliches digitales Abbild des Zahnmodells 38 zu erhalten.

Die im in Fig. 5b dargestellten Schritt gewonnenen Daten können dann mit den Daten, die im in Fig. 5A dargestellten Schritt gewonnen wurden, digital verarbeitet werden, um so mit einem Matching-Verfahren ein möglichst detailgetreues Abbild des Zahnmodells digital zu erhalten.

In Fig. 6 ist eine Vorrichtung zum Abtasten von Zahnmodellen gezeigt, die eine Beschickungsanlage aufweist. Die Beschickungsanlage umfasst eine Kamera 41, mit der Zahnmodelle 34a bis 34e jeweils einzeln oder zusammen erfasst werden können. Die Zahnmodelle werden auf einer Förderstrecke 42, die als Rutsche oder als Förderband oder Ähnliches ausgebildet sein kann, gespeichert. Mit einem Roboterarm 40 können die einzelnen Zahnmodelle 34a bis 34e in die Vorrichtung zum Abtasten von Zahnmodellen eingesetzt werden. Der Roboterarm 40 kann hierbei in Richtung 43 auf und ab und in Richtung 44 nach rechts und links bewegt werden. Auch eine Bewegung quer zur Zeichenebene ist möglich, um maximale Flexibilität zu haben.

Der Roboterarm kann ein Zahnmodell 34a mit Greiferarmen 45a und 45b greifen. Dadurch ist es möglich, das Zahnmodell 34a in die Vorrichtung zum Abtasten einzusetzen oder herauszunehmen. Der Roboterarm ist vorzugsweise so ausgebildet, dass er auch einzelne Modellteile eines Sägezahnmodells aus einem Modellteilhalter herausnehmen kann. Damit können dann auch einzelne Modellteile automatisiert einem Abtastvorgang zugeführt werden.

Die Vorrichtung ist vorteilhafterweise so ausgebildet, dass mit dem Roboterarm oder einem sonstigen mechanischen automatisierten Bedienelement alle Modelle bzw. Modellteile ohne menschliches Zutun den verschiedenen Abtastvorgängen zugeführt werden können.

## Patentansprüche

1. Verfahren zum Abtasten eines Sägezahnmodels (11,14) mit den folgenden Schritten, die in beliebiger Reihenfolge durchgeführt werden können,
**dadurch gekennzeichnet, dass**
- die verschiedenen Modellteile (11';20) eines Sägezahnmodells (11,14) von einem Modellteilhalter (12, 34) gehalten und in dieser Konfiguration abgetastet werden, wobei die Modellteile (11',20) einzelnen Abschnitten eines Gebissmodells entsprechen und wobei, wenn die Modellteile (11',20) von dem Modellteilhalter (12,34) gehalten werden, sie ein Gebiss oder einen Teil davon wiedergeben und wobei der Modellteilhalter (12,34) die relative Lage der einzelnen Modellteile (11',20) zueinander definiert;
- eine oder mehrere der Modellteile (11',20) abgetastet werden, wobei hierbei jedes Modellteil (11',20) unabhängig von den anderen Modellteilen (11',20) erfasst werden kann.

2. Verfahren nach Anspruch 1, **dadurch gekennzeichnet, dass** sowohl Innenseite (22b) als auch Außenseite (22a) des Sägezahnmodells (11,14) abgetastet werden.

3. Verfahren nach Anspruch 1 oder 2, **dadurch gekennzeichnet, dass** die von den einzelnen Modellteilen (11',20) gewonnenen Daten mit den Daten, die von den in den Modellteilhalter (11,34) eingestreckten Modellteilen (11';20) gewonnen wurden, mittels Datenverarbeitung zusammengebracht werden.

4. Verfahren nach einem der Ansprüche 1 bis 3, **dadurch gekennzeichnet, dass** das Abtasten des Sägezahnmodells (11,14) im ersten Schritt durch das Abtasten von mehreren Einzelbereichen erfolgt, die sich jeweils über mehrere Zahnplätze erstrecken.

5. Verfahren nach Anspruch 4, **dadurch gekennzeichnet, dass** ein Modell (11,14), das einen gesamten Oberkiefer oder Unterkiefer repräsentiert mit 3, 4, 5 oder 6 Einzelbereichen auf der Außenseite und einer entsprechenden oder anderen Anzahl auf der Innenseite abgetastet wird.

6. Verfahren nach einem der Ansprüche 4 oder 5, **dadurch gekennzeichnet, dass** zwischen dem Abtasten der verschiedenen Einzelbereiche das Modell verschoben und/oder gedreht wird.

## Claims

1. A method of scanning a split-cast model (11, 14), comprising the following steps, which can be executed in an arbitrary sequence
**characterized in that**
- the various model parts (11', 20) of a split-cast model (11, 14) are held by a model part holder (34) and scanned in this configuration, wherein the model parts (11', 20) correspond to individual portions of a model of a set of teeth and wherein, when the model parts (11', 20) are held by the model part holder (34), they represent a set of teeth or parts thereof and wherein the model part holder (34) defines the position of the individual model parts (11', 20) relative to one another;
- one or a plurality of model parts (11', 20) is scanned, each model part (11', 20) being adapted to be recorded independently of the other model parts (11', 20).

2. A method according to claim 1, **characterized in that** the inner (22b) as well as the outer (22a) side of the split-cast model (11, 14) are scanned.

3. A method according to claim 1 or 2, **characterized in that** the data acquired from the individual model parts (11', 20) are combined, by means of data processing, with the data acquired from the model parts (11',20) inserted in the model part holder (34).

4. A method according to one of the claims 1 to 3, **characterized in that**, in the first step, scanning of the split-cast model (11, 14) is executed by scanning a plurality of individual areas, each of said areas extending over a plurality of tooth sites.

5. A method according to claim 4, **characterized in that** a model (11, 14), which represents a whole upper jaw or lower jaw, is scanned with 3, 4, 5 or 6 individual areas on the outer side and with a corresponding or a different number of individual areas on the inner side.

6. A method according to one of the claims 4 or 5, **characterized in that** the model is displaced and/or rotated between the scanning of the various individual areas.

## Revendications

1. Procédé pour palper un modèle de dents Splitcast (11, 14) comprenant les étapes suivantes, qui peuvent être exécutées dans n'importe quel ordre, **caractérisé**
- **en ce que** les différents éléments (11', 20) d'un modèle de dents Splitcast (11, 14) sont tenus par un support d'éléments de modèle (34) et sont palpés dans cette configuration, étant précisé que les éléments de modèle (11', 20) correspondent à des parties individuelles d'un set de dents et que, quand ils sont tenus par ledit support (34), ils reproduisent un set de dents ou une partie de celui-ci, et que le support d'éléments de modèle (34) définit la position relative des éléments de modèle (11', 20) individuels les uns par rapport aux autres ;
- **en ce qu'**un ou plusieurs éléments de modèle (11', 20) sont palpés, chacun pouvant être détecté indépendamment des autres.

2. Procédé selon la revendication 1, **caractérisé en ce qu'**on palpe aussi bien le côté intérieur (22b) que le côté extérieur (22a) du modèle de dents Splitcast (11, 14).

3. Procédé selon la revendication 1 ou 2, **caractérisé en ce que** les données recueillies sur les éléments de modèle (11', 20) individuels et les données recueillies sur les éléments de modèle (11', 20) qui sont insérés dans le support d'éléments de modèle (34) sont réunies par traitement de données.

4. Procédé selon l'une des revendications 1 à 3, **caractérisé en ce que** le palpage du modèle de dents Splitcast (11, 14) se fait lors de la première étape par palpage de plusieurs zones individuelles qui s'étendent sur plusieurs emplacements de dents.

5. Procédé selon la revendication 4, **caractérisé en ce qu'**un modèle (11, 14) qui représente toute une mâchoire supérieure ou inférieure est palpé avec 3, 4, 5 ou 6 zones individuelles sur le côté extérieur et avec un nombre correspondant ou différent sur le côté intérieur.

6. Procédé selon la revendication 4 ou 5, **caractérisé en ce que** le modèle coulisse et/ou tourne entre les opérations de palpage des différentes zones individuelles.
